# EUROPEAN PATENT APPLICATION

(11) **EP 4 635 841 A1**
(43) Date of publication of application: **22.10.2025**
(21) Application number: 25166910.7
(22) Date of filing: 28.03.2025
(51) Int. Cl.: B64C 1/14

(54) **DOOR MECHANISM AND METHOD OF OPENING A DOOR**

(30) Priority: 18.04.2024 US 202418639753
(71) Applicant: The Boeing Company, Arlington, VA 22202 (US)
(72) Inventor: Mellor, Mitchell, Airlington VA, 22202 (US); Malina, Evan, Arlington, 22202 (US)
(74) Representative: Witte, Weller & Partner Patentanwälte mbB

(57) **Abstract**

A door mechanism has an arm (302), an arm-body interface (320), and an arm-door interface (340). The arm-body interface (320) couples the arm (302) to a door opening in a body (100) in a manner allowing rotation of the arm (302) about an arm-body hinge axis (326). The arm-door interface (340) couples the arm (302) to a door configured to remain parallel to the door opening when moved between closed and open positions. The arm-door interface (340) comprises an arm-door upper joint (342) and an arm-door lower joint (360) located below and inboard of the arm-door upper joint (342). The arm-door upper joint (342) is a spherical joint (346). The arm-door lower joint (360) is located inboard of the arm-door upper joint (342) when the door is in the closed position. The arm-door lower joint (360) pivots about the spherical joint (346) in a manner causing a door lower portion (232) to move in an outboard direction (116) away from the body (100) when the door is moved to the open position.

## Description

### FIELD

The present disclosure relates generally to translating door mechanisms and, more particularly, to a door mechanism configured to pivot a lower portion of a door in an outboard direction as the door is translated from a closed position to an open position.

### BACKGROUND

Large commercial aircraft typically have an inflatable escape slide mounted to each passenger entry door (e.g., emergency egress door) to provide a means for rapid evacuation of the aircraft in the event of an emergency. Each escape slide is housed within a slide bustle mounted to the inside of the door. Certain aircraft such as narrow body aircraft are increasingly designed with doors that accommodate larger escape slides. The larger escape slides are wide enough to enable side-by-side evacuation of passengers, and can function as life rafts in the event of a water landing.

Emergency egress doors with larger escape slides require door mechanisms having longer hinge arms capable of moving the door clear of the door opening in the fuselage. In addition, the longer hinge arms position the open doors further from the fuselage to provide additional space for the larger slide bustle housing the escape slide. Unfortunately, the longer hinge arms are too long to fit on the desired width doors. One solution is to increase the width of the doors to make room for the larger escape slides. However, wider doors increase cost and weight and can negatively impact galley and lavatory locations in the aircraft.

As can be seen, there exists a need in the art for a door mechanism for a door that accommodates a larger escape slide without requiring an increase in the length of the hinge arm.

### SUMMARY

The above-noted needs associated with door mechanisms are addressed by the present disclosure, which provides a door mechanism having an arm, an arm-door interface, and an arm-body interface. The arm-body interface is configured to couple the arm to a side of a door opening in a body in a manner allowing rotation of the arm about an arm-body hinge axis. The arm-door interface is configured to couple the arm to a door that is configured to remain generally parallel to the door opening when the door is moved between a closed position and an open position. The arm-door interface comprises an arm-door upper joint and an arm-door lower joint. The arm-door upper joint is configured as a spherical joint. The arm-door lower joint is located below and inboard of the arm-door upper joint when the door is in the closed position. The arm-door lower joint is pivotable about the spherical joint in a manner causing the arm-door lower joint and a door lower portion to move in an outboard direction away from the body when the door is moved from the closed position to the open position.

Also disclosed is an aircraft having a fuselage and a door mechanism. The fuselage has a door opening and a cabin door. The door has a door lower portion, and the door is configured to remain parallel to the door opening during movement between a closed position and an open position. The door mechanism couples the door to the fuselage, and has an arm, an arm-fuselage interface, and an arm-door interface. The arm-fuselage interface couples the arm to the fuselage and has an arm-fuselage hinge axis. The arm-door interface couples the arm to the door and comprises an arm-door upper joint and an arm-door lower joint. The arm-door upper joint is a spherical joint. The arm-door lower joint is located below and inboard of the arm-door upper joint when the door is in the closed position, and the arm-door lower joint is pivotable about the spherical joint in a manner causing the arm-door lower joint and the door lower portion to move in an outboard direction away from the fuselage when the door is moved to the open position.

Also disclosed is a method of opening a door. The method includes pivoting an arm-door lower joint about a spherical joint in a manner causing the arm-door lower joint and a door lower portion to move in an outboard direction away from a body containing a door opening while maintaining the door generally parallel to the door opening when moving the door from a closed position to an open position. The door is coupled to the body via an arm. The arm is rotatably coupled to a side of the door opening via an arm-body interface having an arm-body hinge axis about which the arm rotates during movement of the door. The arm is coupled to the door via the spherical joint and the arm-door lower joint which is located below and inboard of the spherical joint when the door is in the closed position.

The features, functions, and advantages that have been discussed can be achieved independently in various versions of the disclosure or may be combined in yet other versions, further details of which can be seen with reference to the following description and drawings.

### BRIEF DESCRIPTION OF THE DRAWINGS

The disclosure can be better understood with reference to the following detailed description taken in conjunction with the accompanying drawings, which illustrate preferred and exemplary versions, but which are not necessarily drawn to scale. The drawings are examples and not meant as limitations on the description or the claims.
Figure 1 is a side view of an example of an aircraft having multiple passenger entry doors (i.e., emergency egress doors), each of which is shown in an open position and having an inflatable escape slide deployed from a lower portion of the door;
Figure 2 is a magnified view of one of the cabin doors of Figure 1 showing an escape slide in the deployed configuration;
Figure 3 is an outboard-looking perspective view of an example of an emergency egress door in the closed position and which is supported by the presently-disclosed door mechanism, and further illustrating a slide bustle mounted to the door lower portion for containing an inflatable escape slide;
Figure 4 is an outboard-looking perspective view of the interior components of an emergency egress door in a closed position and illustrating an example of the presently-disclosed door mechanism configured to pivot the door lower portion in an outboard direction away from the fuselage as the door mechanism translates the door from the closed position to an open position;
Figure 5 is an outboard-looking perspective view of the door of Figure 5 in the open position;
Figure 6 is an outboard-looking schematic view of a cabin door in the closed position;
Figure 7 is an end view of the door of Figure 6;
Figure 8 is an outboard-looking schematic view of the door of Figure 6 after initial movement in a vertical direction prior to translation of the door to the open position;
Figure 9 is an end view of the door of Figure 8;
Figure 10 is an outboard-looking schematic view of the door of Figure 8 during translation toward the open position after initial movement in the vertical direction;
Figure 11 is an end view of the door of Figure 10 during translation toward the open position;
Figure 12 is an outboard-looking schematic view of the door of Figure 10 in the open position;
Figure 13 is an end view of the door of Figure 12 in the open position and illustrating the door lower portion pivoted outwardly away from the fuselage;
Figure 14 is an end view of the door showing the increased spacing between the fuselage and the door lower portion of a cabin door supported by the presently-disclosed door mechanism, relative to the spacing between the fuselage and the door lower portion of the same size cabin door supported by a conventional door mechanism (not shown);
Figure 15 is an enlarged perspective view of the door mechanism in the closed position and having an arm and an arm-body interface coupling the arm to a side of the door opening in the fuselage, and further having an arm-door interface coupling the arm to the door;
Figure 16 is a magnified view of the arm-body interface coupling the arm to the side of the door opening, and further illustrating a door guide and doorstop when the door is in the closed position;
Figure 17 is a magnified view of the region identified by reference numeral 17 of Figure 16, and illustrating a post fitting engaged to a slot formed in a guide fitting of the door guide, and further illustrating a door fitting bearing against a body fitting of the doorstop;
Figure 18 is a top-down perspective view of the doorstop of Figure 17 and illustrating the door fitting engaged to the body fitting for preventing outward movement of the door |in the closed position;
Figure 19 shows the door fitting disengaged from the body fitting, and the post fitting disengaged from the guide fitting as the door translates in an outboard direction after movement of the post fitting in a vertical direction along the slot in the guide fitting;
Figure 20 shows further movement of the door in the outboard direction during translation of the door toward the open position;
Figure 21 is a perspective view of the arm-door interface having an arm-door upper joint configured as a spherical joint, and having an arm-door lower joint having an arm-door lower hinge axis located below and inboard of the spherical joint, and further illustrating a lift assist mechanism in the form of a compression spring configured to assist in lifting the door relative to the arm when the door is in the closed position;
Figure 22 is a further perspective view of the arm-door interface of Figure 21 showing the arm-door lower joint having an arm-door lower connector assembly coupling the arm to the door;
Figure 23 is an end view of the arm-door interface illustrating the arm-door lower connector assembly comprised of a link and a trapeze for accommodating lifting of the door;
Figure 24 is a top-down view of the door mechanism illustrating the arm-door lower hinge axis located inboard of the spherical joint;
Figure 25 is a top-down view of the door mechanism taken along line 25-25 of Figure 23, and illustrating the arm-body joint configured as an arm-body hinge joint having an arm-body hinge axis, and further illustrating the link and the trapeze coupling the arm to the door at the arm-door interface;
Figure 26 is a magnified view of the arm-door lower joint of Figure 25;
Figure 27 is an end view of the door mechanism when the door is in the open position;
Figure 28 is a top-down view of the door mechanism taken along line 28-28 of Figure 27, and illustrating the arm-door lower hinge axis located outboard of the spherical joint when the door is in the open position;
Figure 29 is a magnified view of the arm-door lower joint of Figure 28;
Figure 30 is a schematic view illustrating the relative positions of the various joints and axes of the door mechanism during movement of the door from the open position to the closed position;
Figure 31 is a flowchart of a method of opening a door using the presently-disclosed door mechanism.

The figures shown in this disclosure represent various aspects of the versions presented, and only differences will be discussed in detail.

### DETAILED DESCRIPTION

Disclosed versions will now be described more fully hereinafter with reference to the accompanying drawings, in which some, but not all of the disclosed versions are shown. Indeed, several different versions may be provided and should not be construed as limited to the versions set forth herein. Rather, these versions are provided so that this disclosure will be thorough and fully convey the scope of the disclosure to those skilled in the art.

This specification includes references to "one version" or "a version." Instances of the phrases "one version" or "a version" do not necessarily refer to the same version. Similarly, this specification includes references to "one example" or "an example." Instances of the phrases "one example" or "an example" do not necessarily refer to the same example. Particular features, structures, or characteristics may be combined in any suitable manner consistent with this disclosure.

As used herein, "comprising" is an open-ended term, and as used in the claims, this term does not foreclose additional structures or steps.

As used herein, "configured to" means various parts or components may be described or claimed as "configured to" perform a task or tasks. In such contexts, "configured to" is used to connote structure by indicating that the parts or components include structure that performs those task or tasks during operation. As such, the parts or components can be said to be configured to perform the task even when the specified part or component is not currently operational (e.g., is not on).

As used herein, an element or step recited in the singular and preceded by the word "a" or "an" should be understood as not necessarily excluding the plural of the elements or steps. As used herein, the term "and/or" includes any and all combinations of one or more of the associated listed items. As also used herein, the term "combinations thereof" includes combinations having at least one of the associated listed items, wherein the combination can further include additional, like non-listed items.

As used herein, the phrase "at least one of," when used with a list of items, means different combinations of one or more of the listed items may be used, and only one of each item in the list may be needed. In other words, "at least one of" means any combination of items and number of items may be used from the list, but not all of the items in the list are required. The item may be a particular object, a thing, or a category.

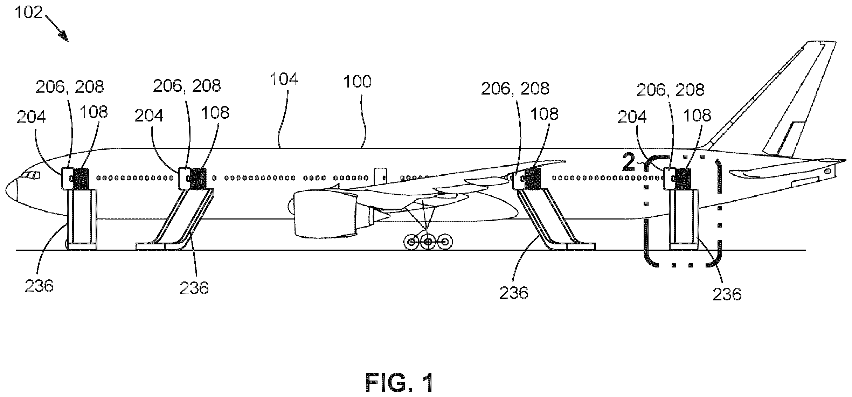

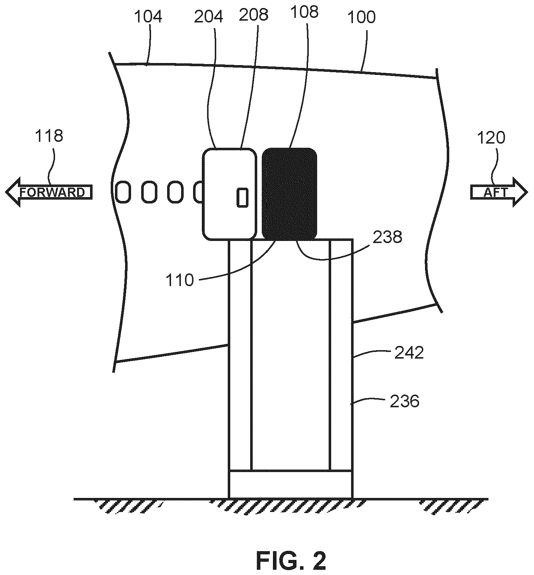

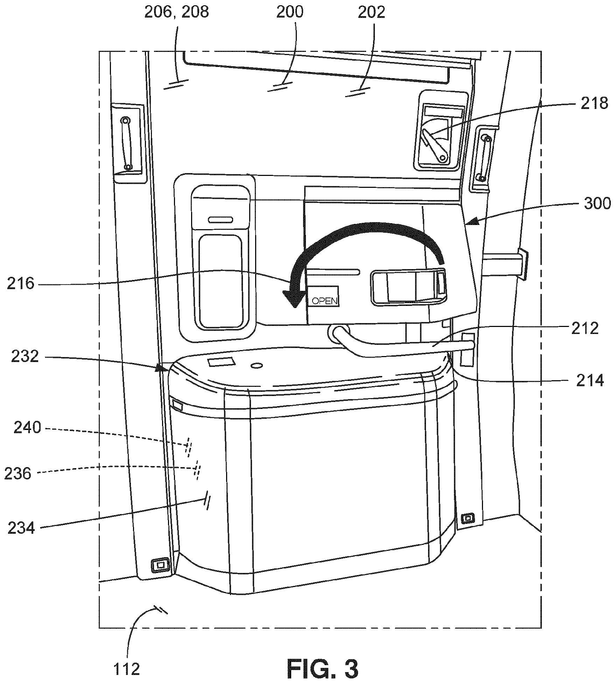

Referring now to the drawings which illustrate various examples of the disclosure, shown in Figure 1 is an example of an aircraft 102 having a fuselage 104 with multiple door openings 108 and a door 206 (e.g., an emergency egress door 208 such as a passenger door or a galley door) for each door opening 108. In Figure 1, each door 206 is in the open position 204 and an inflatable escape slide 236 is deployed from each door 206. Figure 2 is a magnified view of a portion of the aircraft 102 of Figure 1 showing one of the doors in the open position 204 and showing an example of an escape slide 236 in the deployed configuration 242. The escape slide 236 has a slide upper portion 238 that is attached to a door sill 110 (Figure 2) at the location where the floor 112 (Figure 3) meets the bottom of the door opening 108.

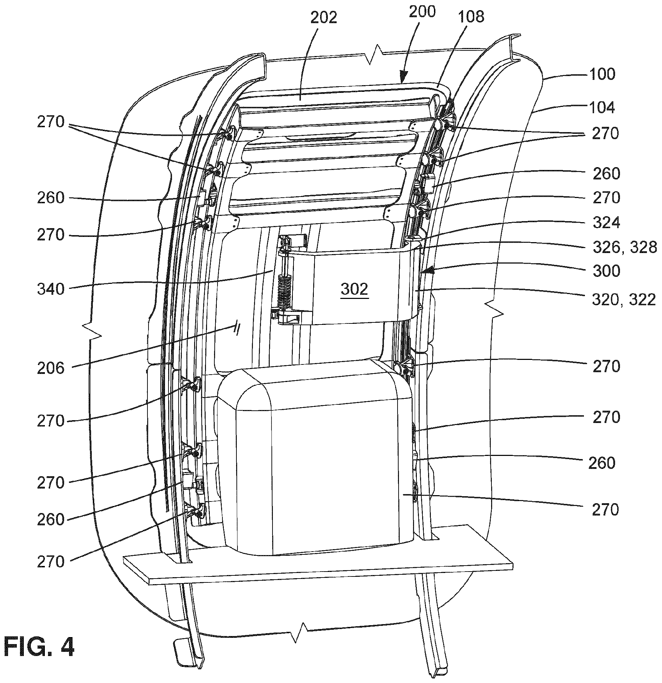

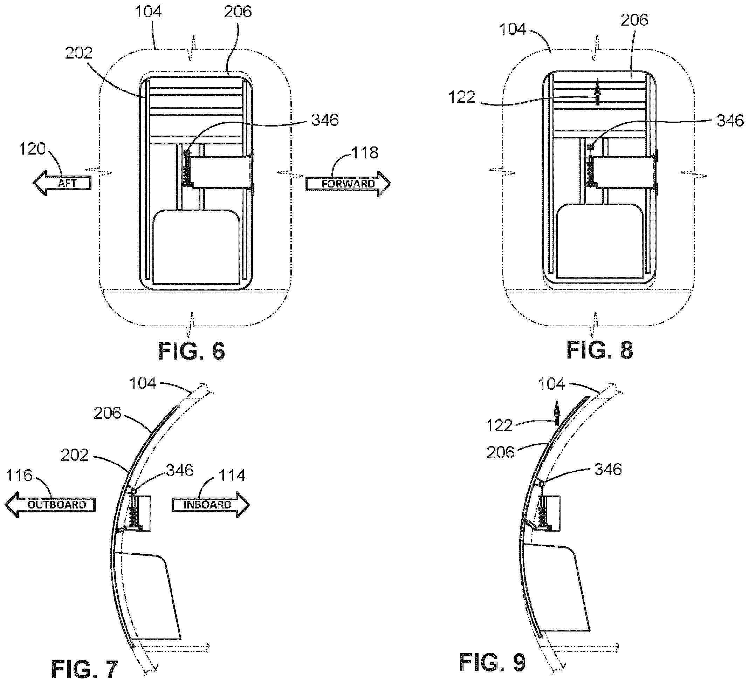

Referring to Figure 3, shown is an outboard-looking view of an example of a door 206 (i.e., an emergency egress door 208) in the closed position 202. The door 206 is supported by the presently-disclosed door mechanism 300 (Figures 4-5), which is part of a door assembly 200 that includes an inflatable escape slide 236 mounted in a stowed configuration 240 within a slide bustle 234 on the inboard side of the door lower portion 232 of the door 206. The door assembly 200 includes a door operating handle 212 that is rotatable approximately 180 degrees between a closed orientation 214 and an open orientation 216. When the door operating handle 212 is in the closed orientation 214, the door 206 is essentially locked in the closed position 202. Moving the door operating handle 212 to the open orientation 216 moves the door 206 in a generally upward (e.g., assisted by a lift assist mechanism 400) in a vertical direction 122 (Figures 6-9) to a height at which the door 206 can then be manually moved (e.g., via a member of the aircraft crew) in an outboard 116 direction toward the open position 204, as described in greater detail below.

In the example shown, the door 206 moves in a forward 118 direction (Figures 3-4) of the aircraft 102 when translating from the closed position 202 to the open position 204. However, in other examples not shown, the door mechanism 300 can be configured to move the door 206 in an aft 120 direction when translating from the closed position 202 to the open position 204. Furthermore, although the door mechanism 300 is described in the context of an emergency egress door 208 of an aircraft 102, the door mechanism 300 can be implemented on any type of door configured to be supported by a double-acting hinge arm. In this regard, the terms "door," "cabin door," and "emergency egress door" are used interchangeably in the present disclosure.

In the example shown, the door assembly 200 includes a door mode selector handle 218 for arming the door 206 when in the closed position 202. In this regard, the slide upper portion 238 (Figure 2) of the stowed escape slide 236 has a girt bar (not shown) that engages with the door sill 110 (Figure 2) when the door mode selector handle 218 is moved to the armed position. In the event of an emergency, the escape slide 236 will deploy and inflate when the door 206 is opened.

Referring to Figures 4-5, shown are outboard-looking views of the door assembly 200 showing the door mechanism 300 which supports the door 206. The door mechanism 300 includes an arm 302, an arm-door interface 340, and an arm-body interface 320. The arm-door interface 340 couples the arm 302 to the door 206, as described in greater detail below.

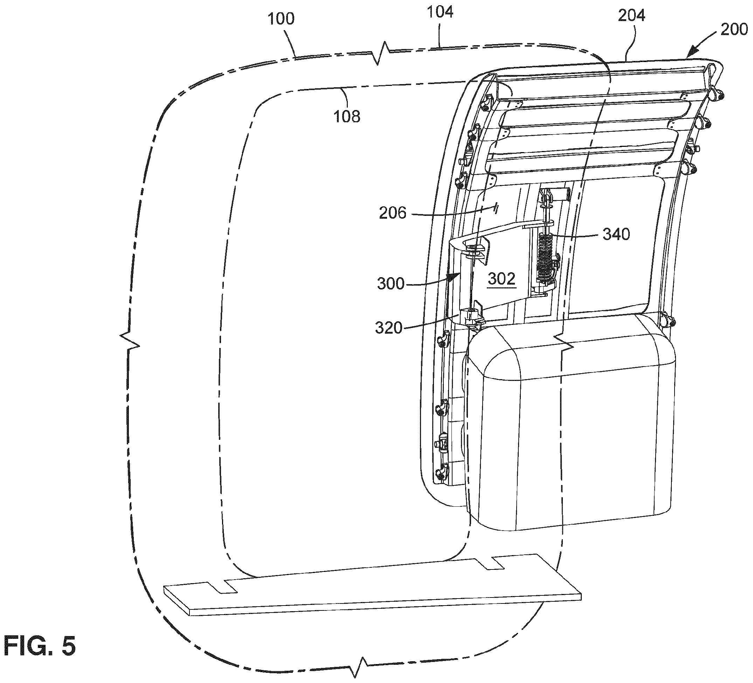

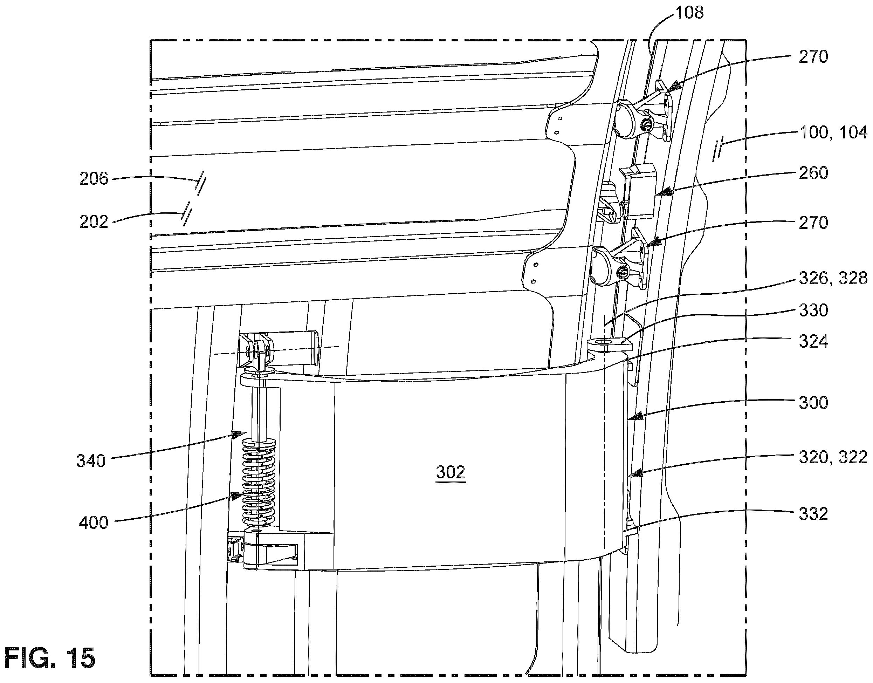

The arm-body interface 320 couples the arm 302 to a body 100, such as the fuselage 104 of an aircraft 102 (Figure 1). More specifically, the arm-body interface 320 (e.g., an arm-fuselage interface 322) has an arm-body hinge joint 324 having an arm-body hinge axis 326 (e.g., an arm-fuselage hinge axis 328 - Figure 15). The arm-body hinge joint 324 couples the arm 302 to a side of the door opening 108 in the body 100. The arm-body hinge joint 324 allows the arm 302 to rotate about the arm-body hinge axis 326 for moving the door 206 between the closed position 202 (Figure 4) and the open position 204 (Figure 5). In the present example, the arm 302 rotates through an angle of slightly less than 180 degrees (e.g., 164 degrees) about the arm-body hinge axis 326 (Figure 15) when the door 206 is moved from the closed position 202 to the open position 204. However, the geometry of the door mechanism 300 can be configured such that the movement of the door 206 from the closed position 202 to the open position 204 requires rotation of the arm 302 through an any angular range, including through an angle of exactly 180 degrees, or through an angle of greater than 180 degrees.

The door mechanism 300 is a translating door mechanism in the sense that the door 206 is configured to remain generally parallel to the door opening 108 when the door 206 is moved between the closed position 202 (Figure 4) and the open position 204 (Figure 5). More specifically, when the body 100 is viewed from a top-down perspective, the orientation of the door 206 relative to the body 100 generally stays the same as the door 206 is moved between the closed position 202 and the open position 204. The orientation of the door 206 (i.e., when viewed from a top-down perspective) is controlled by a programming system (not shown) that controls (i.e., programs) the orientation of the door 206 when the door is moved between the closed position 202 and the open position 204. The programming system may comprise a gear-and-chain arrangement, a rack-and-pinion arrangement, a four-bar-linkage mechanism, or any one of a variety of alternative arrangements or mechanisms for controlling the orientation of the door 206 relative to the body 100 during translation of the door 206 between the closed position 202 and the open position 204.

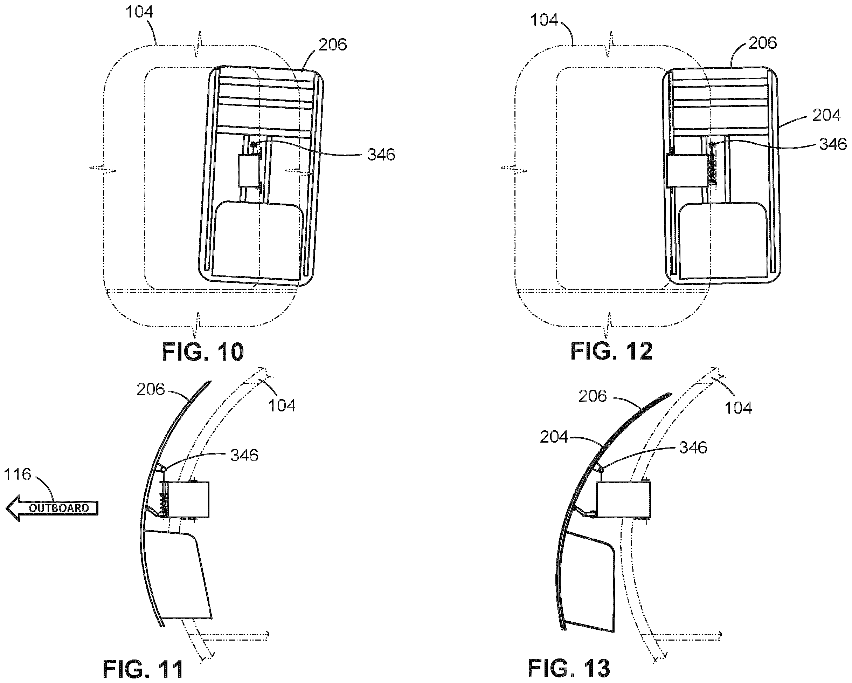

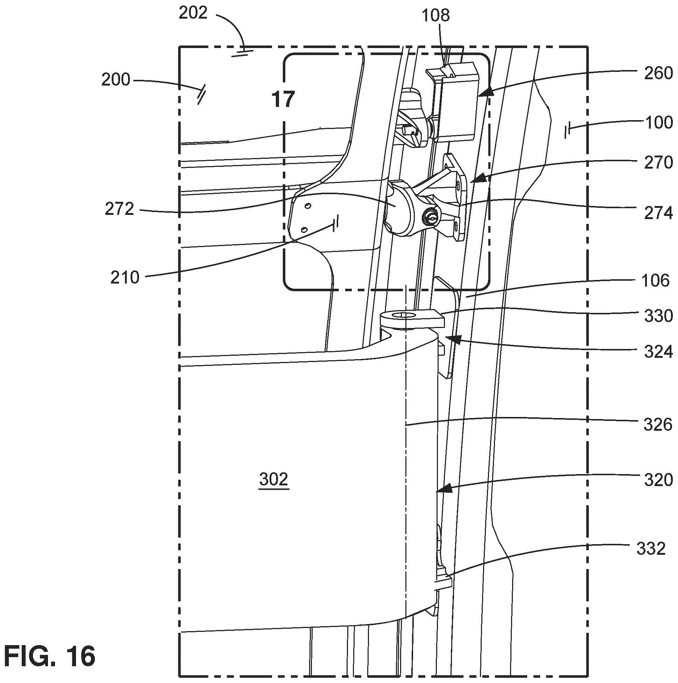

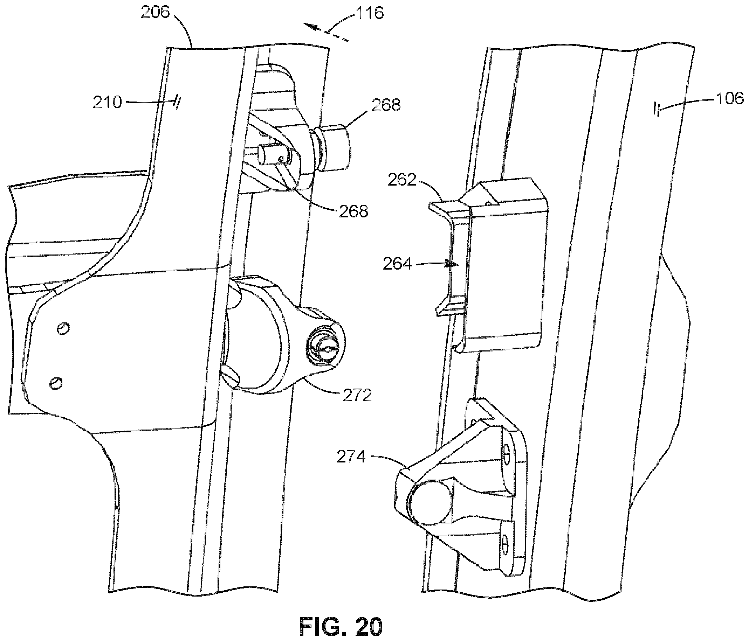

Referring to Figures 6-13, shown are schematic illustrations of a door 206 and a fuselage 104 during movement of the door 206 from a closed position 202 to an open position 204. Figures 6-7 are side and end views respectively of the door 206 in the closed position 202. Figures 8-9 are side and end views of the door 206 after completing an initially upward movement of the door 206 in a vertical direction 122, as is required for disengaging the below described doorstops 270 (Figures 16-20) to allow movement of the door 206 in an outboard 116 direction, as described in greater detail below. Figures 10-11 are side and end views of the door 206 approximately midway through its movement from the closed position 202 to the open position 204. As shown in the side view of Figure 10, the door 206 has a tilted orientation as a result of the arm-door interface 340 in which the arm-door lower joint 360 is located inboard of the arm-door upper joint 342 (e.g., a spherical joint 346 - Figure 15) about which the door lower portion 232 pivots during movement of the door 206 from the closed position 202 to the open position 204, as described in greater detail below. Figures 12-13 are side and end views respectively of the door 206 in the open position 204. The end view of Figure 13 shows the tilted orientation of the door 206 in the open position 204, which is different that its non-tilted orientation in the closed position 202 shown in Figure 7.

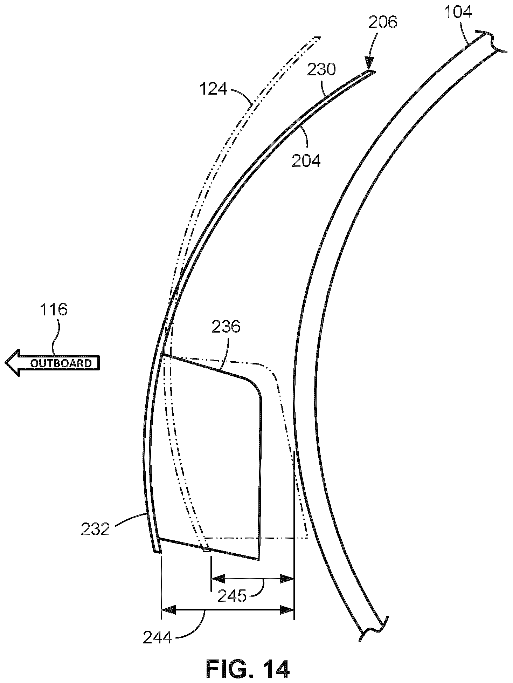

Referring to Figure 14, shown in solid lines is an end view of the fuselage 104 and the door 206 in the open position 204. The tilted orientation of the door 206 results in the door lower portion 232 being further away from the fuselage 104 than the door upper portion 230, and is a result of the geometry of the arm-door interface 340 of the presently-disclosed door mechanism 300 (Figure 15). As described in greater detail below, the geometry of the arm-door interface 340 causes the door lower portion 232 to move outwardly away from the fuselage 104 to a greater extent than the door upper portion 230 during translation of the door 206 from the closed position 202 to the open position 204.

In Figure 14, the tilted orientation of the door 206 (shown in solid lines) in the open position 204 results in an increased distance 244 between the fuselage 104 and the door lower portion 232, relative to a nominal distance 245 between the fuselage 104 and the door lower portion 232 of the same size conventional door 124 (shown in phantom lines) supported by a conventional door mechanism (not shown). The increased distance 244 between the fuselage 104 and the door lower portion 232 allows a larger escape slide 236 to be carried by the door 206 than can otherwise be carried. For example, the increased distance 244 provides an additional 1-2 cubic feet of volume at the door lower portion 232 for stowing an escape slide 236, as compared to a smaller stowage volume associated with the same size conventional door 124 supported by a conventional door mechanism. Advantageously, the increased stowage volume available using the presently-disclosed door mechanism 300 enables a larger escape slide 236 to be mounted to the door 206, such as a wider slide enabling side-by-side egress capability, a larger slide providing life raft capabilities, and/or a longer slide for aircraft that are higher off the ground.

Referring to Figure 15, shown is a magnified view of the door mechanism 300 of Figure 4 which is shown supporting the door 206 in the closed position 202. As mentioned above, the door mechanism 300 includes the arm 302, the arm-body interface 320, and the arm-door interface 340. The arm-body interface 320 has an arm-body hinge joint 324 that couples the arm 302 to the side of the door opening 108 in the body 100, such as the fuselage 104 of an aircraft 102 (Figure 1). In the example shown, the arm-body interface 320 comprises an arm-body upper hinge joint 330 and an arm-body lower hinge joint 332 which is located below the arm-body upper hinge joint 330. The arm-body upper hinge joint 330 and the arm-body lower hinge joint 332 collectively define the arm-body hinge axis 326 about which the arm 302 rotates during movement of the door 206 between the closed position 202 and the open position 204.

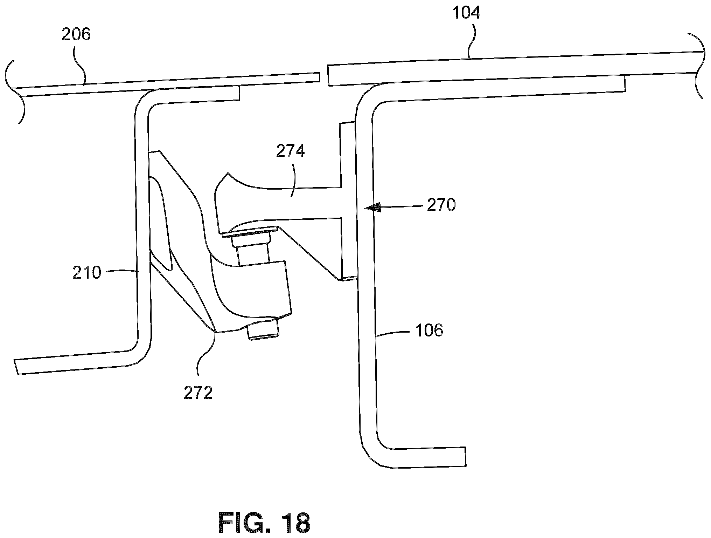

Referring to Figures 15-17, the door assembly 200 also includes doorstops 270 and door guides 260. As shown in Figure 4, a plurality of doorstops 270 are vertically distributed on opposite sides of the door 206. The doorstops 270 are configured to prevent movement of the door 206 in an outboard 116 direction when the door 206 is in the closed position 202 and the aircraft cabin is internally pressurized. Each doorstop 270 is comprised of a door fitting 272 and a body fitting 274. Each door fitting 272 is configured to engage with a body fitting 274 when the door 206 is in the closed position 202. In the example shown, each door fitting 272 is mounted to a door frame 210 located proximate the side edge of the door 206. Each body fitting 274 is mounted to the body 100. For example, in Figures 15-17, each body fitting 274 is mounted to a fuselage frame 106 located on the side of the door opening 108. When the door 206 is in the closed position 202, each of the door fittings 272 is engaged to a corresponding one of the body fittings 274 as shown in Figure 18, thereby preventing movement of the door 206 in the outboard 116 direction.

The process of moving the door operating handle 212 (Figure 3) from the closed orientation 214 to the open orientation (not shown) urges the door 206 in a generally upward direction to a lifted position (Figures 8-9. The primary lifting force for lifting the door 206 is provided by rotating (e.g., manually via a crew member) the door operating handle 212 approximately 180 degrees from its closed orientation 214 to its open orientation.

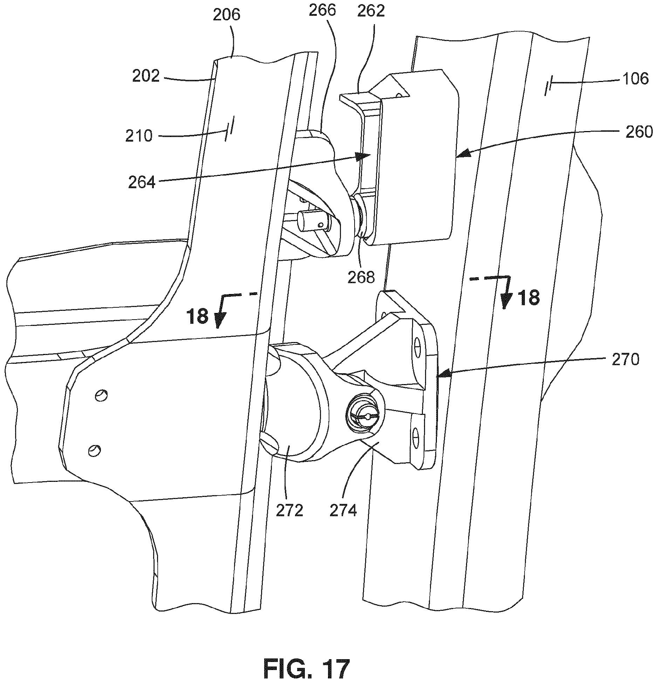

Referring to Figures 4 and 17-20, shown in Figure 4 are door guides 260 located on opposite sides of the door opening 108. As shown in Figures 17-20, each door guide 260 is comprised of a post fitting 266 and a guide fitting 262. Each post fitting 266 is configured to engage with a guide fitting 262. In the example shown, each post fitting 266 is mounted to a door frame 210 on the door 206. Each guide fitting 262 is mounted to a fuselage frame 106 on the side of the door opening 108. Each post fitting 266 has a laterally protruding post 268, and each guide fitting 262 has a slot 264 configured to receive the post 268. Rotation of the door operating handle 212 from its closed orientation 214 to its open orientation causes the posts 268 to engage with the slots 264 in a manner urging the door 206 in a generally upward direction out of its closed position 202.

Figure 17 shows a post 268 of one of the post fittings 266 supported at the bottom of a slot 264 in one of the guide fittings 262. The position of the post 268 at the bottom of the slot 264 corresponds to the door 206 being in the closed position 202. As mentioned above, when the door 206 is in the closed position 202, the door fittings 272 are engaged to the body fittings 274 (e.g., Figure 18) in a manner preventing movement of the door 206 in the outboard 116 direction.

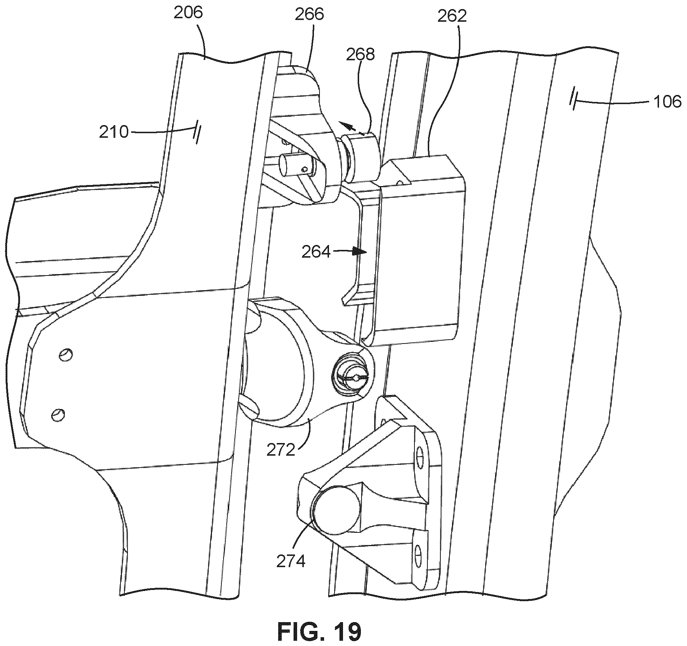

As shown in Figure 19, the lower portion of the slot 264 in the guide fitting 262 is oriented at an angle, which causes the door 206 to initially move a short distance (e.g., less than 0.5 inch) in an inboard-upward direction to thereby disengage the door fitting 272 from the body fitting 274, after which the post 268 moves upwardly in a vertical direction 122 through the slot 264 under the upward force of the lift assist mechanism 400. When the posts 268 of all the post fittings 266 exit the top of the slots 264 of the corresponding guide fittings 262 (Figure 19), the door 206 has been lifted through a vertical distance (e.g., two inches) that allows the door fittings 272 to clear the body fittings 274 as the door 206 is moved under manually applied force such as by a member of the ground crew pulling on the door 206 from outside the aircraft 102, or a member of the flight crew pushing on the door 206 from inside the aircraft 102.

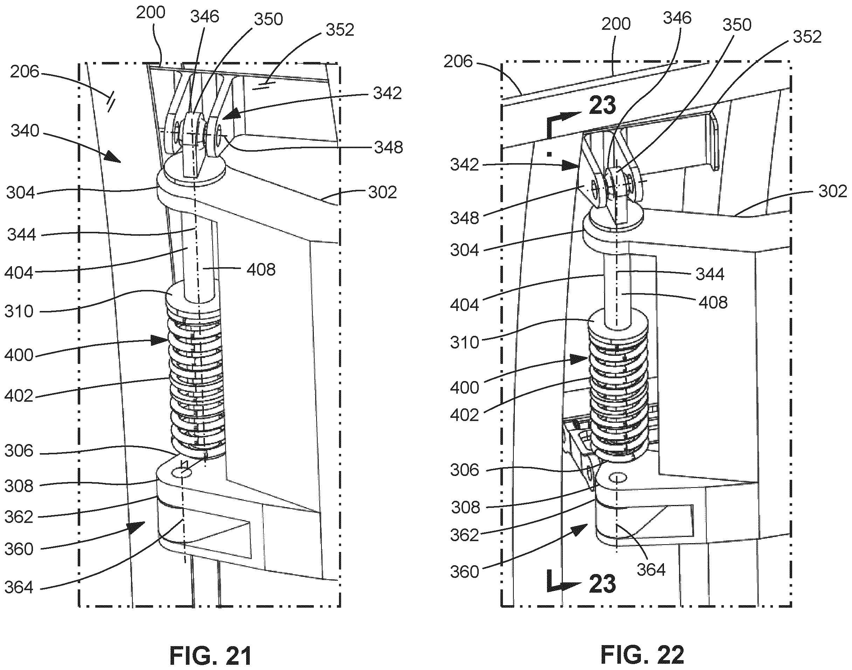

Referring briefly to Figures 21-23, the door assembly 200 includes the above-mentioned lift assist mechanism 400 which assists in lifting the door 206 in the vertical direction 122 (Figures 8-9) from its closed position 202 (Figures 6-7) when the door operating handle 212 (Figure 3) is rotated. In the example shown, the lift assist mechanism 400 is configured as a compression spring 402 mounted on a lift column 404. The lift column 404 extends between the arm-door upper joint 342 and an arm lower flange 306. The lift column 404 is attached to the arm via the arm lower flange 306 and an arm upper flange 304. The compression spring 402 is captured between the arm lower flange 306 and a column flange 310 fixedly mounted on the lift column 404.

To accommodate vertical movement of the door 206 during rotation of the door operating handle 212 under assistance from the compression spring 402, the lift column 404 is telescopically extendable through an opening in the arm upper flange 304. As an alternative to or in addition to the compression spring 402, the lift assist mechanism 400 can be provided in any one of a variety of alternative configurations. For example, the lift assist mechanism can be provided as a linear actuator 408 such as a pneumatic cylinder extending between the arm-door upper joint 342 and the arm lower flange 306. The linear actuator 408 can be used in conjunction with the compression spring 402, or the linear actuator 408 can replace the compression spring 402.

Referring to Figures 21-29, the arm-door interface 340 includes the above-mentioned arm-door upper joint 342 and the arm-door lower joint 360. The arm-door upper joint 342 is configured as a spherical joint 346 for accommodating pivoting motion of the door 206 during movement between the closed position 202 and the open position 204. An arm-door upper hinge axis 344 is shown passing through the center of the spherical joint 346. The arm-door upper hinge axis 344 is parallel to the arm-body hinge axis 326 and (Figure 15). In the example shown, the lift column 404 is aligned with the arm-door upper hinge axis 344.

In Figures 21-29, the spherical joint 346 is a ball-socket end fitting 350 extending from the upper end of the lift column 404. The ball-socket end fitting 350 is coupled to a clevis fitting 352 which is mounted directly to the door 206. In addition to universal rotation, the ball-socket end fitting 350 is rotatable about a spherical joint axis 348 defined by a mechanical fastener (not shown) coupling the ball-socket end fitting 350 to the clevis fitting 352.

The spherical joint 346 may be provided in any one of a variety of alternative configurations, and is not limited to the arrangement shown in Figures 21-29. For example, the spherical joint 346 can be provided as a ball-socket end fitting 350 protruding in an inboard 114 direction from the door 206, and the clevis fitting 352 can be mounted on the upper end of the lift column 404. Other configurations are possible for the spherical joint 346 such as a universal joint or any other joint configuration that accommodates substantially universal rotational motion of the door 206 relative to the arm 302.

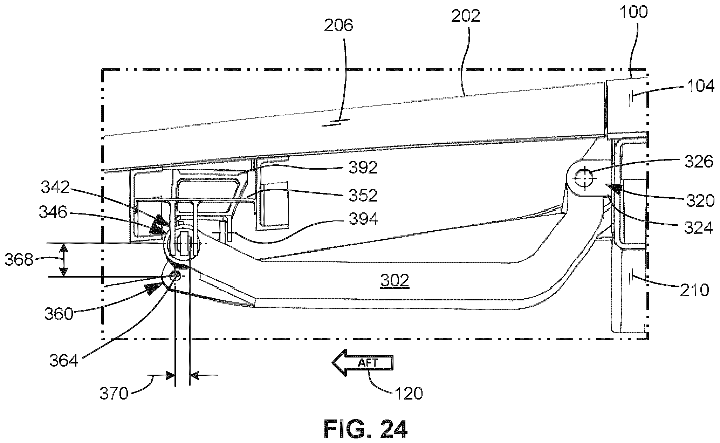

The arm-door lower joint 360 is located below and inboard (i.e., inboard offset 368) of the arm-door upper joint 342 when the door 206 is in the closed position 202 as shown in Figure 24. The arm-door lower joint 360 is pivotable about the spherical joint 346 in a manner causing the arm-door lower joint 360 and the door lower portion 232 (Figure 14) to move in the outboard 116 direction away from the body 100 (i.e., the fuselage 104) when the door 206 is moved from the closed position 202 to the open position 204.

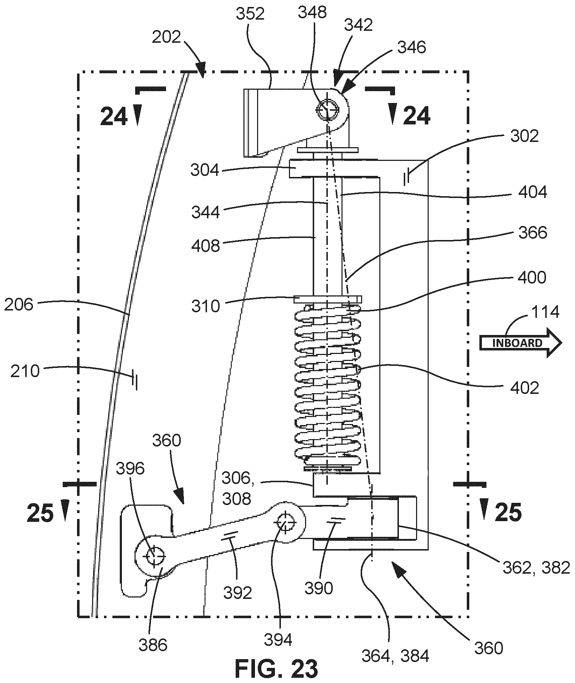

The arm-door lower joint 360 comprises an arm-door hinge joint 362 having an arm-door lower hinge axis 364. The arm-door lower hinge axis 364 passes through an arm-door lower joint flange 308 that protrudes from the arm 302. In the example shown, the arm-door lower joint flange 308 is coextensive with the arm lower flange 306. The arm-door lower hinge axis 364 is parallel to the arm-body hinge axis 326. Figure 23 shows an arm-door virtual axis 366 that extends between the spherical joint 346 and the arm-door lower hinge axis 364. When the door 206 is moved between the closed position 202 and the open position 204, the motion of the arm-door lower joint 360 can be described as a rotational motion about the arm-door virtual axis 366.

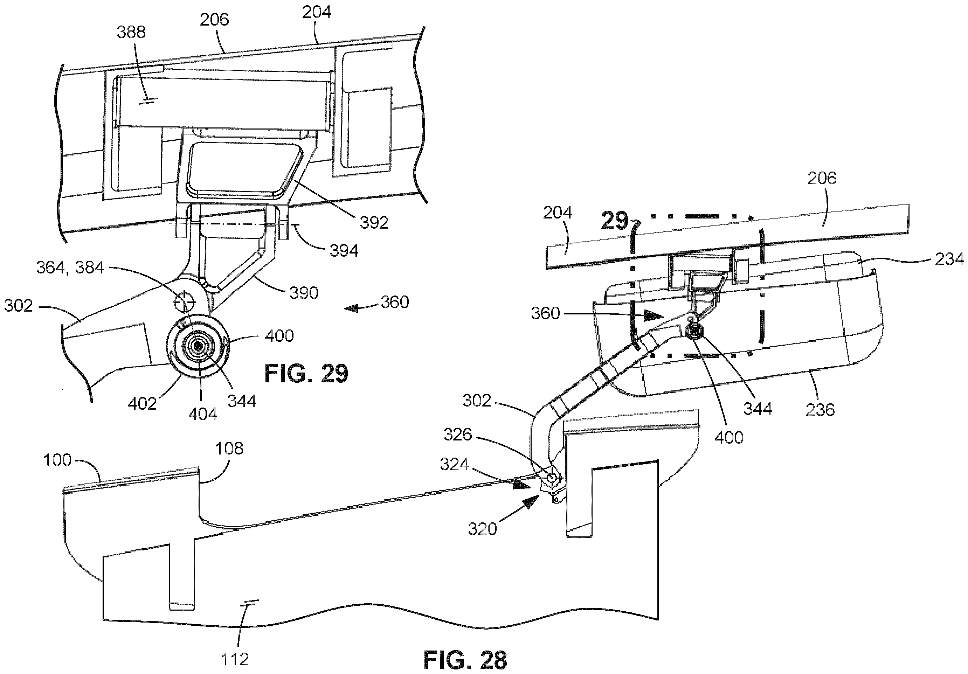

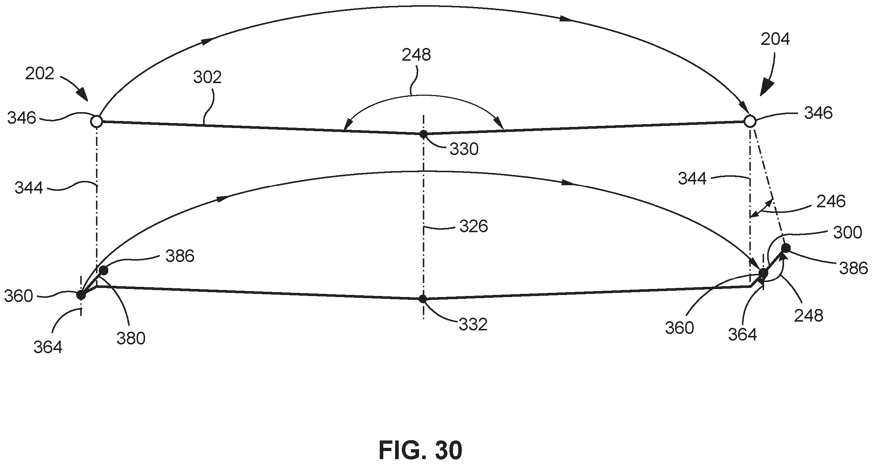

In addition to being offset in the inboard 114 direction (i.e., the inboard offset 368 - Figure 24), the arm-door lower joint 360 (i.e., the arm-door lower hinge axis 364) is also offset from the arm-door upper joint 342 in an axial direction of the body 100 at a distance further from the arm-body interface 320 than the arm-door upper joint 342. For example, in Figure 24, the arm-door lower joint 360 (i.e., the arm-door lower hinge axis 364) is offset from the arm-door upper joint 342 in the aft 120 direction (i.e., an aft offset 370) of the fuselage 104. The offset of the arm-door lower hinge axis 364 in both the inboard 114 direction (Figure 24) and the aft 120 direction (Figure 24) is complementary to rotation of the arm 302 through an angular range 248 (Figure 30) of approximately164 degrees about the arm-body hinge axis 326 when the door 206 is moved from the closed position 202 (Figure 24) to the open position 204 (Figure 28).

When the fuselage 104 is viewed for a side-view perspective as shown in Figure 2, the offset of the arm-door lower hinge axis 364 (Figure 24) in both the inboard 114 direction (Figure 24) and the aft 120 direction (Figure 24) results in the door 206 in the open position 204 being oriented generally parallel to the door opening 108. In this regard, the arm-door lower joint 360 (i.e., the arm-door lower hinge axis 364) can be offset from the arm-door upper joint 342 by any amount in the axial direction (e.g., in either the forward 118 direction or the aft 120 direction) as may be dictated by the angular range 248 through which the arm 302 must be rotated in order to move the door 206 from a desired closed position 202 to a desired open position 204. For example, for an arrangement (not shown) in which movement of a door 206 from a closed position 202 to an open position 204 requires rotation of the arm 302 through an angle of exactly 180 degrees, the door mechanism 300 can be configured such that the arm-door lower joint 360 (i.e., the arm-door lower hinge axis 364) is at the same axial location as the arm-door upper joint 342 (i.e., no axial offset).

In Figures 21-29, the arm-door lower joint 360 comprises an arm-door lower connector assembly 380 that extends between the arm 302 and the door 206. The arm-door lower connector assembly 380 has a connector arm end and a connector door end. The connector arm end is coupled to the arm 302 at a connector-arm joint 382 and is rotatable about a connector-arm axis 384 (i.e., the arm-door lower hinge axis 364) which is parallel to the arm-body hinge axis 326 (Figure 15). The connector door end is coupled to the door 206 at a connector-door joint 386 as described below.

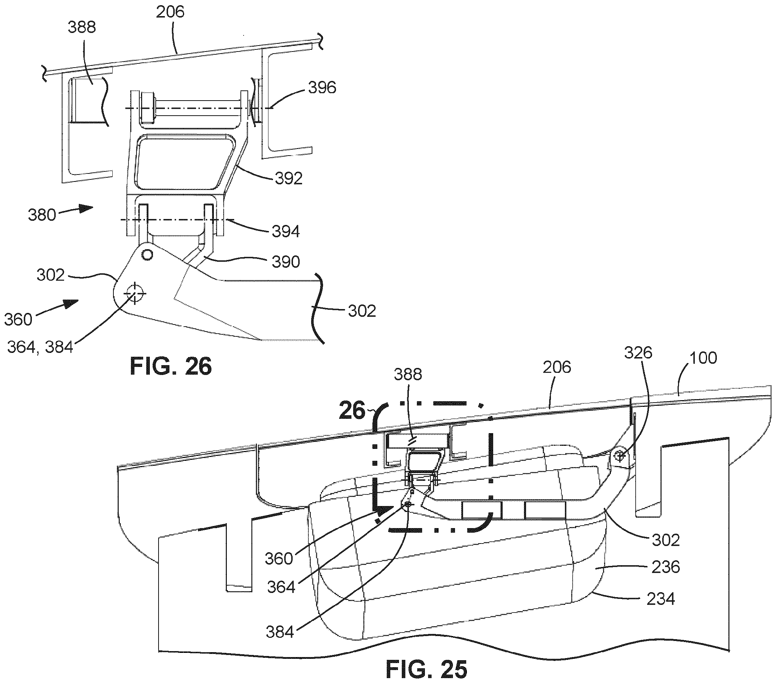

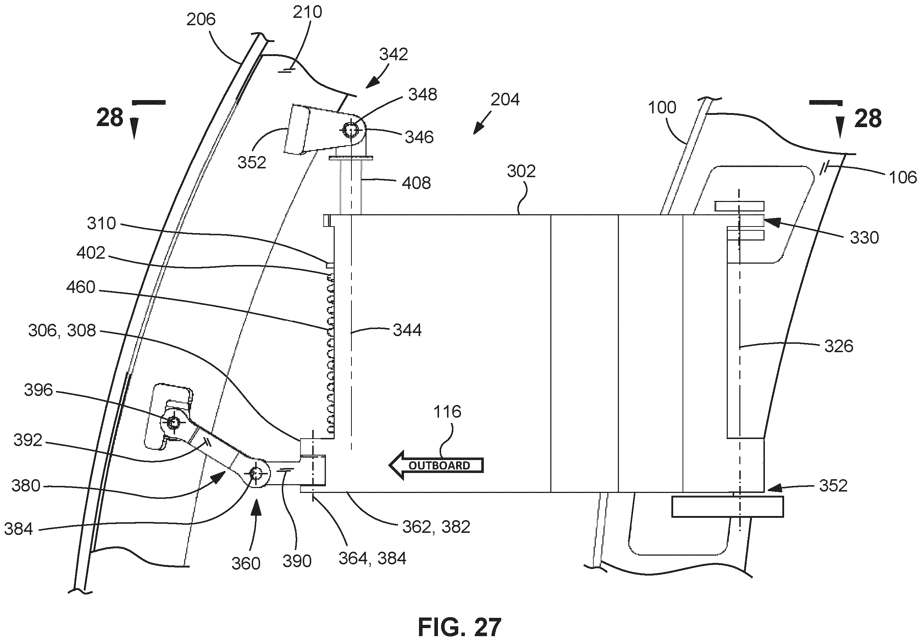

As shown in Figures 23-29, the arm-door lower connector assembly 380 comprises a link 390 and a trapeze 392 connected in series. The link 390 is rotatable about the connector-arm axis 384 (i.e., the arm-door lower hinge axis 364). The trapeze 392 couples the link 390 to the door 206 and has opposing trapeze ends. Each trapeze end is configured to pivot about an axis oriented perpendicular to the connector-arm axis 384 to thereby accommodate vertical movement of the door 206. For example, one of the trapeze ends is coupled to the link 390 and is rotatable about a trapeze-link axis 394 (Figure 26) oriented perpendicular to the arm-door lower hinge axis 364 (Figure 23). The opposite trapeze end is coupled to the door 206 and is rotatable about a trapeze-door axis 396 (Figure 26) that is parallel to the trapeze-link axis 394. The trapeze-link axis 394 and the trapeze-door axis 396 are horizontally oriented. The combination of the link 390 and the trapeze 392 provide the degrees of freedom necessary to accommodate vertical movement (e.g., lifting) of the door 206 relative to the arm 302 as the arm-door lower joint 360 pivots about the spherical joint 346 when the door 206 is moved from the closed position 202 (Figures 23-26) to the open position 204 (Figures 27-29).

During movement of the door 206 between the closed position 202 and the open position 204, the spherical joint 346 reacts the mass of the door 206 at least in the vertical direction 122. The spherical joint 346 is non-reactive of rotational forces about the spherical joint axis 348. The arm-door lower joint 360 reacts rotational forces from the link 390 and trapeze 392 to the door 206, and is non-reactive of the mass of the door 206 in the vertical direction 122.

Figure 30 schematically illustrates the rotation of the arm 302 through an angular range 248 about the arm-body hinge axis 326, and the equivalent angular rotation of the arm-door lower connector assembly 380 (e.g., the link 390 and the trapeze 392) about the arm-door lower hinge axis 364 when the door 206 (Figure 24) moves from the closed position 202 to the open position 204 (Figure 28). Also shown in Figure 30 are the relative positions of the various joints and axes when the door 206 is in the closed position 202, and the relative positions of the same joints and axes when the door 206 is in the open position 204. For example, shown are the arm-body upper hinge joint 330 and the arm-body lower hinge joint 332, the spherical joint 346 of the arm-door upper joint 342 and its arm-door upper hinge axis 344, the arm-door lower joint 360 and its arm-door lower hinge axis 364, and the connector-door joint 386 which couples the arm-door lower connector assembly 380 to the door 206 (Figures 24 and 28).

Figure 30 also shows the tilt angle 246 of the door 206 in the open position 204, which is the result of the inboard offset 368 (Figure 24) of the arm-door lower joint 360 relative to the arm-door upper joint 342 when the door 206 is in the closed position 202. As mentioned above and shown in Figure 14, the tilted orientation of the door 206 results in the door lower portion 232 being further away from the fuselage 104 than the door upper portion 230, allowing a larger escape slide 236 to be carried by the door 206.

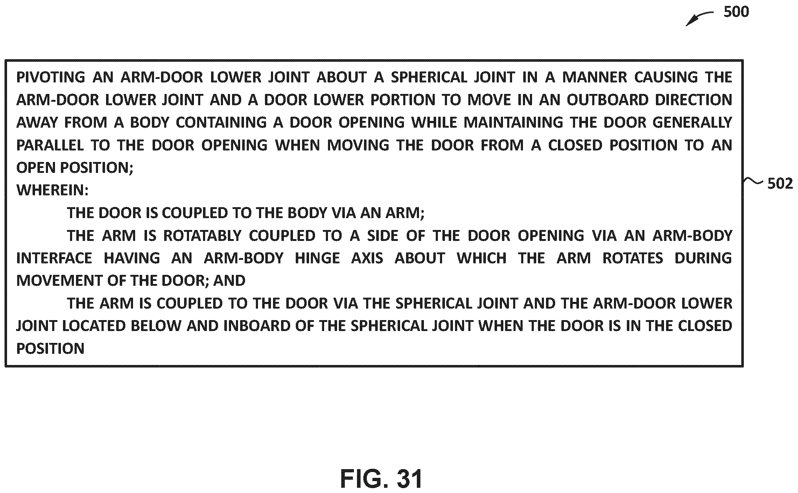

Referring to Figure 31, shown is a method 500 of opening a door 206 using the door mechanism 300. As described above, the door 206 is coupled to the body 100 via an arm 302. The arm 302 is rotatably coupled to the side of the door opening 108 via the arm-body interface 320 which has an arm-body hinge axis 326 about which the arm 302 rotates during movement of the door 206. In the example shown, the arm-body hinge axis 326 is defined by an arm-body upper hinge joint 330 and an arm-body lower hinge joint 332 which is located below the arm-body upper hinge joint 330. The arm 302 is coupled to the door 206 via the spherical joint 346 and the arm-door lower joint 360. The arm-door lower joint 360 is located below the spherical joint 346. When the door 206 is in the closed position 202, the arm-door lower joint 360 (i.e., the arm-door lower hinge axis 364) is located on the inboard side of the spherical joint 346, as shown in Figure 24 and described above.

The method 500 initially includes rotating the door operating handle 212 from its closed orientation 214 to its open orientation 216. As described above, rotating the door operating handle 212 from the closed orientation 214 to the open orientation 216 causes lifting of the door 206 relative to the arm 302, with assistance from the lift assist mechanism 400. The lift assist mechanism 400 can applying the lift-assisting force using the compression spring 402 and/or a linear actuator 408 described above and shown in Figures 21-23. Alternatively or additionally, the process of assisting in lifting the door 206 can be performed using any one of a variety of alternative arrangements for the lift assist mechanism 400, and is not limited to a compression spring 402 and/or a linear actuator 408.

As shown in Figures 17-20 and described above, the process of lifting the door 206 is performed for the purpose of disengaging door fittings 272 (e.g., mounted on the sides of the door 206) from body fittings 274 (e.g., mounted on the sides of the door openings 108). The initial direction of movement of the door 206 is controlled by the movement of posts 268 of the post fittings 266 within slots 264 in the guide fittings 262 of the door guides 260. Under the upward force applied to the door 206 via rotation of the door operating handle 212, the posts 268 initially slide a short distance in an inboard-upward direction within the slots 264 of the guide fittings 262, after which the posts 268 slide in a vertical direction 122 within the slots 264 of the guide fittings 262 until exiting the top of the slots 264. When the posts 268 exit the slots 264 (Figure 19), the door 206 has been lifted to a height that allows the door fittings 272 to clear the body fittings 274 when the door 206 is moved in the outboard 116 direction.

The method 500 of opening the door 206 includes step 502 of pivoting the arm-door lower joint 360 about the spherical joint 346 in a manner causing the arm-door lower joint 360 and the door lower portion 232 to move in the outboard 116 direction away from the body 100 while maintaining the door 206 (when viewed from a top-down perspective) generally parallel to the door opening 108 when moving the door 206 from the closed position 202 to the open position 204. Step 502 of pivoting the arm-door lower joint 360 about the spherical joint 346 can also be described as rotating the door 206 about an arm-door virtual axis 366 extending between the spherical joint 346 and the arm-door lower joint 360, as shown in Figures 21 and 23. In addition, step 502 of pivoting the arm-door lower joint 360 about the spherical joint 346 comprises rotating the arm 302 about the arm-body hinge axis 326, which is oriented parallel to the arm-body hinge axis 326. The method of opening the door 206 comprises reacting, using the spherical joint 346, the mass of the door 206 at least in the vertical direction 122 when moving the door 206 between the closed position 202 and the open position 204. Due to the arrangement of the door mechanism 300, the arm-door lower joint 360 is non-reactive of the mass of the door 206 in the vertical direction 122.

Pivoting the arm-door lower joint 360 about the spherical joint 346 comprises rotating the arm-door lower joint 360 about the arm-door lower hinge axis 364, which is oriented parallel to the arm-body hinge axis 326 as described above and shown in Figures 21-23. The process of rotating the arm-door lower joint 360 about the arm-door lower hinge axis 364 comprises rotating the arm-door lower joint 360 about the arm-door lower hinge axis 364 which is offset from the spherical joint 346 in an axial direction of the body 100 at a distance further from the arm-body interface 320 than the spherical joint 346. For example, the arm-door lower hinge axis 364 is axially offset from the arm-door upper joint 342 in the aft 120 direction (i.e., an aft offset 370), which is complementary to the angular range 248 (e.g., 164 degrees) through which the arm 302 is rotated when the door 206 moved from the closed position 202 to the open position 204. However, the arm-door lower hinge axis 364 can be axially offset from the arm-door upper joint 342 by any amount in either the forward 118 direction or aft 120 direction as may be required to move the door 206 from a desired closed position 202 to a desired open position 204.

The method 500 can be described in the context of an aircraft 102 in which the door opening 108 is in a fuselage 104, and the door opening 108 has a door sill 110 (Figure 2). For example, as described above, the door 206 can be an emergency egress door 208 having an inflatable escape slide 236 mounted in a stowed configuration 240 to the inner side of the emergency egress door 208. The escape slide 236 has a slide upper portion 238 that is engageable to the door sill 110 by arming the emergency egress door 208 when in the closed position 202. In the context of an aircraft 102, step 502 comprises pivoting the arm-door lower joint 360 about the spherical joint 346 in a manner causing the door lower portion 232 of the emergency egress door 208 to move away from the fuselage 104 in the outboard 116 direction.

As shown in Figure 14 and described above, movement of the door lower portion 232 away from the fuselage 104 in the outboard 116 direction results in an increased distance 244 between the fuselage 104 and the door lower portion 232 relative to a nominal distance 245 between the fuselage 104 and the door lower portion 232 of a conventional door of the same size door and which is supported by a conventional door mechanism (not shown). The increased distance 244 between the fuselage 104 and the door lower portion 232 allows a larger escape slide 236 to be carried by the door 206, such as one capable of accommodating side-by-side egress of passengers down the escape slide 236 and/or one that is large enough to function as a life raft, and/or a longer slide for taller aircraft.

Further, the disclosure comprises embodiments according to the following clauses:
Clause 1. A door mechanism, comprising:
   an arm; and
   an arm-body interface configured to couple the arm to a side of a door opening in a body in a manner allowing rotation of the arm about an arm-body hinge axis;
   an arm-door interface configured to couple the arm to a door configured to remain generally parallel to the door opening when the door is moved between a closed position and an open position, the arm-door interface comprising:
      an arm-door upper joint configured as a spherical joint; and
      an arm-door lower joint located below and inboard of the arm-door upper joint when the door is in the closed position, and the arm-door lower joint is pivotable about the spherical joint in a manner causing the arm-door lower joint and a door lower portion to move in an outboard direction away from the body when the door is moved from the closed position to the open position.
Clause 2. The door mechanism of Clause 1, wherein:
   the arm-door lower joint is offset from the arm-door upper joint in an axial direction of the body at a distance further from the arm-body interface than the arm-door upper joint.
Clause 3. The door mechanism of Clause 1 or 2, further comprising:
   a lift assist mechanism configured to lift the door relative to the arm when the door is in the closed position prior to movement to the open position.
Clause 4. The door mechanism of Clause 3, wherein:
   the lift assist mechanism comprises one of a compression spring or a linear actuator.
Clause 5. The door mechanism of Clause 3 or 4, wherein the arm-door lower joint comprises:
   an arm-door lower connector assembly;
   the arm-door lower connector assembly is couplable to the arm at a connector-arm joint having a connector arm axis that is parallel to the arm-body hinge axis and about which the arm-door lower connector assembly is rotatable; and
   the arm-door lower connector assembly is couplable to the door at a connector-door joint.
Clause 6. The door mechanism of Clause 5, wherein the arm-door lower connector assembly comprises:
   a link configured to rotate about the connector arm axis; and
   a trapeze configured to couple the link to the door and having opposing trapeze ends, and each trapeze end is configured to rotate about an axis oriented perpendicular to the connector arm axis to thereby accommodate lifting of the door.
Clause 7. The door mechanism of any of Clauses 1 to 6, wherein:
   the arm-body interface comprises an arm-body upper hinge joint and an arm-body lower hinge joint located below the arm-body upper hinge joint.
Clause 8. The door mechanism of any of Clauses 1 to 7, wherein when the door is moved between the closed position and the open position:
   the spherical joint is configured to react a mass of the door at least in a vertical direction; and
   the arm-door lower joint is configured to be non-reactive of the mass of the door in the vertical direction.
Clause 9. An aircraft, comprising:
   a fuselage having a door opening and a cabin door having a door lower portion, and the cabin door is configured to remain parallel to the door opening during movement between a closed position and an open position;
   a door mechanism coupling the cabin door to the fuselage, and comprising:
      an arm;
      an arm-fuselage interface coupling the arm to the fuselage and having an arm-fuselage hinge axis;
      an arm-door interface coupling the arm to the cabin door and comprising:
         an arm-door upper joint configured as a spherical joint; and
         an arm-door lower joint located below and inboard of the arm-door upper joint when the door is in the closed position, and the arm-door lower joint is pivotable about the spherical joint in a manner causing the arm-door lower joint and the door lower portion to move in an outboard direction away from the fuselage when the cabin door is moved to the open position.
Clause 10. The aircraft of Clause 9, wherein:
   the door opening has a door sill; and
   the cabin door includes an inflatable escape slide mounted in a stowed configuration to an inner side of the cabin door and having a slide upper portion that is engageable to the door sill by arming the cabin door when in the closed position.
Clause 11. A method of opening a door, comprising:
   pivoting an arm-door lower joint about a spherical joint in a manner causing the arm-door lower joint and a door lower portion to move in an outboard direction away from a body having a door opening while maintaining the door generally parallel to the door opening when moving the door from a closed position to an open position;
   wherein:
      the door is coupled to the body via an arm;
      the arm is rotatably coupled to a side of the door opening via an arm-body interface having an arm-body hinge axis about which the arm rotates during movement of the door; and
      the arm is coupled to the door via the spherical joint and the arm-door lower joint located below and inboard of the spherical joint when the door is in the closed position.
Clause 12. The method of Clause 11, wherein pivoting the arm-door lower joint about the spherical joint when moving the door from the closed position to the open position comprises:
   rotating the door about an arm-door virtual axis extending between the spherical joint and the arm-door lower joint.
Clause 13. The method of Clause 11 or 12, wherein pivoting the arm-door lower joint about the spherical joint when moving the door from the closed position to the open position comprises:
   rotating the arm-door lower joint about an arm-door lower hinge axis oriented parallel to the arm-body hinge axis.
Clause 14. The method of Clause 13, wherein rotating the arm-door lower joint about the arm-door lower hinge axis comprises:
   rotating the arm-door lower joint about the arm-door lower hinge axis which is offset from the spherical joint in an axial direction of the body at a distance further from the arm-body interface than the spherical joint.
Clause 15. The method of any of Clauses 11 to 14, wherein:
   the arm-body hinge axis is defined by an arm-body upper hinge joint and an arm-body lower hinge joint located below the arm-body upper hinge joint.
Clause 16. The method of any of Clauses 11 to 15, further comprising:
   assisting in lifting the door relative to the arm using a lift assist mechanism when the door is in the closed position prior to moving the door to the open position.
Clause 17. The method of Clause 16, wherein lifting the door comprises:
   assisting in lifting the door using one of a compression spring or a linear actuator.
Clause 18. The method of any of Clauses 11 to 17, further comprising:
   reacting, using the spherical joint, a mass of the door at least in a vertical direction when moving the door between the closed position and the open position, and the arm-door lower joint is non-reactive of the mass of the door in the vertical direction.
Clause 19. The method of any of Clauses 11 to 18, wherein pivoting the arm-door lower joint about the spherical joint when moving the door from the closed position to the open position comprises:
   pivoting the arm-door lower joint about the spherical joint in a manner causing the door lower portion of a door to move away from a fuselage containing the door opening.
Clause 20. The method of any of Clauses 11 to 19, wherein:
   the door opening has a door sill; and
   the door is an emergency egress door having an inflatable escape slide mounted in a stowed configuration to an inner side of the door and having a slide upper portion that is engageable to the door sill by arming the door when in the closed position.

Many modifications and other versions and examples of the disclosure will come to mind to one skilled in the art to which this disclosure pertains having the benefit of the teachings presented in the foregoing descriptions and the associated drawings. The versions and examples described herein are meant to be illustrative and are not intended to be limiting or exhaustive. Although specific terms are employed herein, they are used in a generic and descriptive sense only and not for purposes of limitation. Functionally equivalent methods and apparatuses within the scope of the disclosure, in addition to those enumerated herein, are possible from the foregoing descriptions. Such modifications and variations are intended to fall within the scope of the appended claims. The present disclosure is to be limited only by the terms of the appended claims, along with the full scope of equivalents to which such claims are entitled.

## Claims

1. A door mechanism (300), comprising:
an arm (302); and
an arm-body interface (320) configured to couple the arm (302) to a side of a door opening (108) in a body (100) in a manner allowing rotation of the arm (302) about an arm-body hinge axis (326);
an arm-door interface (340) configured to couple the arm (302) to a door (206) configured to remain generally parallel to the door opening (108) when the door (206) is moved between a closed position (202) and an open position (204), the arm-door interface (340) comprising:
an arm-door upper joint (342) configured as a spherical joint (346); and
an arm-door lower joint (360) located below and inboard (114) of the arm-door upper joint (342) when the door (206) is in the closed position (202), and the arm-door lower joint (360) is pivotable about the spherical joint (346) in a manner causing the arm-door lower joint (360) and a door lower portion (232) to move in an outboard (116) direction away from the body (100) when the door (206) is moved from the closed position (202) to the open position (204).

2. The door mechanism (300) of Claim 1, wherein:
the arm-door lower joint (360) is offset from the arm-door upper joint (342) in an axial direction of the body (100) at a distance further from the arm-body interface (320) than the arm-door upper joint (342).

3. The door mechanism (300) of Claim 1 or 2, further comprising:
a lift assist mechanism (400) configured to lift the door (206) relative to the arm (302) when the door (206) is in the closed position (202) prior to movement to the open position (204), wherein preferably:
the lift assist mechanism (400) comprises one of a compression spring (402) or a linear actuator (408).

4. The door mechanism (300) of Claim 3, wherein the arm-door lower joint (360) comprises:
an arm-door lower connector assembly (380);
the arm-door lower connector assembly (380) is couplable to the arm (302) at a connector-arm joint (382) having a connector arm axis (384) that is parallel to the arm-body hinge axis (326) and about which the arm-door lower connector assembly (380) is rotatable; and
the arm-door lower connector assembly (380) is couplable to the door (206) at a connector-door joint (386); wherein the arm-door lower connector assembly (380) preferably comprises:
a link (390) configured to rotate about the connector arm axis (384); and
a trapeze (392) configured to couple the link (390) to the door (206) and having opposing trapeze ends, and each trapeze end is configured to rotate about an axis oriented perpendicular to the connector arm axis (384) to thereby accommodate lifting of the door (206).

5. The door mechanism (300) of any of Claims 1 to 4, wherein:
the arm-body interface (320) comprises an arm-body upper hinge joint (330) and an arm-body lower hinge joint (332) located below the arm-body upper hinge joint (330).

6. The door mechanism (300) of any of Claims 1 to 5, wherein when the door (206) is moved between the closed position (202) and the open position (204):
the spherical joint (346) is configured to react a mass of the door (206) at least in a vertical direction (122); and
the arm-door lower joint (360) is configured to be non-reactive of the mass of the door (206) in the vertical direction (122).

7. An aircraft (102), comprising:
a fuselage (104) having a door opening (108) and a cabin door (206) having a door lower portion (232), and the cabin door (206) is configured to remain parallel to the door opening (108) during movement between a closed position (202) and an open position (204);
a door mechanism (300) of any of claims 1 to 6 coupling the cabin door (206) to the fuselage (104), and preferably comprising:
an arm-fuselage interface (322), instead of the arm-door interface, coupling the arm (302) to the fuselage (104) and having an arm-fuselage hinge axis (328).

8. The aircraft (102) of Claim 7, wherein:
the door opening (108) has a door sill (110); and
the cabin door (206) includes an inflatable escape slide (236) mounted in a stowed configuration (240) to an inner side of the cabin door (206) and having a slide upper portion (238) that is engageable to the door sill (110) by arming the cabin door (206) when in the closed position (202).

9. A method of opening a door (206), comprising:
pivoting an arm-door lower joint (360) about a spherical joint (346) in a manner causing the arm-door lower joint (360) and a door lower portion (232) to move in an outboard (116) direction away from a body (100) having a door opening (108) while maintaining the door (206) generally parallel to the door opening (108) when moving the door (206) from a closed position (202) to an open position (204);
wherein:
the door (206) is coupled to the body (100) via an arm (302);
the arm (302) is rotatably coupled to a side of the door opening (108) via an arm-body interface (320) having an arm-body hinge axis (326) about which the arm (302) rotates during movement of the door (206); and
the arm (302) is coupled to the door (206) via the spherical joint (346) and the arm-door lower joint (360) located below and inboard (114) of the spherical joint (346) when the door (206) is in the closed position (202).

10. The method of Claim 9, wherein pivoting the arm-door lower joint (360) about the spherical joint (346) when moving the door (206) from the closed position (202) to the open position (204) comprises:
rotating the door (206) about an arm (302)-door (206) virtual axis extending between the spherical joint (346) and the arm-door lower joint (360).

11. The method of Claim 9 or 10, wherein pivoting the arm-door lower joint (360) about the spherical joint (346) when moving the door (206) from the closed position (202) to the open position (204) comprises:
rotating the arm-door lower joint (360) about an arm-door lower hinge axis (364) oriented parallel to the arm-body hinge axis (326), wherein rotating the arm-door lower joint (360) about the arm-door lower hinge axis (364) preferably comprises:
rotating the arm-door lower joint (360) about the arm-door lower hinge axis (364) which is offset from the spherical joint (346) in an axial direction of the body (100) at a distance further from the arm-body interface (320) than the spherical joint (346).

12. The method of any of Claims 9 to 11, wherein:
the arm-body hinge axis (326) is defined by an arm-body upper hinge joint (330) and an arm-body lower hinge joint (332) located below the arm-body upper hinge joint (330).

13. The method of any of Claims 9 to 12, further comprising:
assisting in lifting the door (206) relative to the arm (302) using a lift assist mechanism (400) when the door (206) is in the closed position (202) prior to moving the door (206) to the open position (204), wherein lifting the door (206) preferably comprises:
assisting in lifting the door (206) using one of a compression spring (402) or a linear actuator (408).

14. The method of any of Claims 9 to 13, further comprising:
reacting, using the spherical joint (346), a mass of the door (206) at least in a vertical direction (122) when moving the door (206) between the closed position (202) and the open position (204), and the arm-door lower joint (360) is non-reactive of the mass of the door (206) in the vertical direction (122).

15. The method of any of Claims 9 to 14, wherein pivoting the arm-door lower joint (360) about the spherical joint (346) when moving the door (206) from the closed position (202) to the open position (204) comprises:
pivoting the arm-door lower joint (360) about the spherical joint (346) in a manner causing the door lower portion (232) of a door (206) to move away from a fuselage (104) containing the door opening (108).
